# EUROPEAN PATENT SPECIFICATION

(11) **EP 3 668 075 B1**
(45) Date of publication and mention of the grant of the patent: **31.07.2024**
(21) Application number: 18212634.2
(22) Date of filing: 14.12.2018
(51) Int. Cl.: H04N 1/00, G06F 3/12, H04N 1/60

(54) **A METHOD FOR COLOR MANAGEMENT IN A PRINTING SYSTEM**
VERFAHREN ZUR FARBVERWALTUNG IN EINEM DRUCKSYSTEM
PROCÉDÉ DE GESTION DE COULEURS DANS UNE IMPRIMANTE

(43) Date of publication of application: 17.06.2020
(73) Proprietor: Canon Production Printing Holding B.V., 5914 HH Venlo (NL)
(72) Inventor: Kruizinga, Peter, 5914 CA Venlo (NL); Kessels, Gerardus G.J.C, 5914 CA Venlo (NL)
(74) Representative: Canon Production Printing IP Department

(56) References cited:
- EP-A1- 3 078 501
- EP-A1- 3 301 562
- US-A1- 2004 218 199
- US-A1- 2008 088 891
- US-A1- 2018 107 436

## Description

### BACKGROUND OF THE INVENTION

### 1. Field of the invention

The invention relates to a method for color management in a printing system comprising a printer, having printer settings to convert image color values into printer colorant control values, the method comprising the calibration steps of:
a) printing a color test chart for a specified media type on the printer;
b) measuring printed colors on the test charts;
c) establishing a relation between printed colors, media type and printer settings; and
d) adjusting the printer settings on the basis of the established relation.

### 2. Description of the Related Art

In the printing industry, color management comprises all activities and procedures that aim at assuring that a perceived color impression of a print product meets the expectations of the customer. Under standardized illumination conditions, the perceived color impression depends upon the print process employed in the printer, the settings of the printer, the composition and properties of the inks or toners used for printing, and the properties of the media on which the printed image is recorded.

A known method of color management has been described in US 2012/188596 A1.

US 2004/218199 A1 discloses in its prior art section that printers are usually calibrated when powered up and at later predetermined intervals during operation. Many types of calibration processes need to be performed to ensure proper print quality according to this section.

It is common practice to establish, for each media type, or family of media types with similar properties, a color profile that relates a collection of frequently used printed colors to the amounts of marking material (ink or toner) in the basic print colors or colorants (e.g. CYMK for cyan, magenta, yellow, and black marking material) that have to be applied on the medium in order to achieve the desired color impression. In a process called profile calibration, the amounts of marking material as specified by the color profile are mapped onto the settings of the printer that are necessary for printing the required amounts of marking material. This profile calibration is part of a calibration procedure. Another part of the calibration procedure is what is known as the proper calibration, which relates to establishing a relation between an amount of marking material and printer colorant control values, which may vary from printer to printer of the same type. Although the amount of marking material is optically determined, it is not a color, but an optical density that is used as a measure for the amount of marking material.

The calibration procedure may also comprise a validation procedure, wherein a measure for the accuracy of a color profile is derived from a color measurement of specific printed color patches on a validation test chart. This procedure may be part of a digital print certification, such as defined by IDEAllance (Digital Press Certification) or by Fogra (Validation Printing System Certification), and allows an assessment of the color reproduction quality by comparing actual printed colors with their respected target values. Furthermore, it allows monitoring the color constancy over time, by comparing current with previous validation results.

Since all these procedures, profile calibration, proper calibration, and validation, involve the same steps, albeit with different test charts, they are all called calibration in this description. It is noted that, in theory, a color profile is only dependent on a type of printer and not on a particular instance of the printer, but in practice, often a color profile is made for each instance of a print engine individually. Furthermore, there is a dependence among the various calibrations, so the order wherein they are executed is important.

Because the components of the print engine as well as the inks or toners and the properties of the media may vary over time (e.g. due to ageing, production tolerances or change of ink recipe), it is necessary to update the color profiles and the calibrations from time to time. Each update comprises printing a number of test charts, measuring the printed colors, and comparing them to corresponding target colors, and, if there is a discrepancy, changing the settings specifications for the print engine in order to eliminate the discrepancy.

An update interval for a color profile and a different (typically shorter) update interval for the proper calibration may be specified for each media type or family of media types. A color management software application or the printer itself stores the last update time for each media type. When the update interval is about to expire, the operator of the printing system is alerted, so that an update can be made before the related media type is used next time.

If the printing system comprises a plurality of print engines (in the expression "a printer" in the claims, "a" is an indefinite article, not a number), it may sometimes be sufficient to execute an update of a color profile on a representative printer among the printers that employ the same print process. In contrast, a proper calibration update has to be made for each printer separately.

Typically, each update procedure requires at least some of a number of time-consuming activities, including for example:
- providing a supply of media of the media type to which the update applies;
- loading the media into the print engine (waiting for a media tray to open, load media, close, detect media level);
- adjust the engine settings (which may include adjusting the print gap between a print head and the media surface and/or waiting for the engine to warm-up or cool down to a specified process temperature, and the like);
- print a number of engine check pages (typically 4) for testing whether the engine settings are correct and the print engine is in an appropriate condition;
- print the test charts;
- perform the calibration or profiling measurements;
- unload the media from the tray (waiting for the tray to open, unload media, close tray, detect media level).

Since such sequences have to be repeated for each media type or family requiring an update, and since the print engine on which the update is running cannot be used for production printing, it is conceivable that the updates imply a significant loss in overall productivity of the printing system.

It is therefore an object of the invention to reduce the productivity losses due to calibration updates.

### SUMMARY OF THE INVENTION

In order to achieve this object, the method according to the invention comprises an additional step of composing a test chart print job, wherein at least two calibrations for at least two different media types according to the calibration steps a) to d) that are due within a predetermined time range, are collected to be executed collectively.

Thus, according to the invention, the activities involved in printing test charts for a plurality of media types are integrated into a common print job, the so-called test chart print job, which is handled in the printing system just as any normal production print job, except for specific engine settings and engine operation for calibration purposes, such as printing engine check pages. This has the advantage that the calibration update processes can be rationalized. For example, the engine check pages need to be printed only once for the entire test chart print job, the activities involved in loading and unloading the print media for the updates can be performed in parallel for the plurality of media types, and technics that are known for mixed media printing may be employed for determining the sequence in which the test charts are printed such that the time required for adjusting the engine settings are minimized (examples for such techniques are described in EP 1 244 054 A1, EP 3 078 501 A1, EP 3 206 119 A1).

More specific optional features of the invention are indicated in the dependent claims.

In an embodiment, a pending print job queue is analyzed for requirements relating to the calibration status. This comprises for example an analysis of the required media for a print job in the queue and the customer wishes in relation to a particular print job.

If the print process employed requires that certain components of the printer (such as a fusing or curing station) and/or the media for calibration are heated to a certain process temperature, the sequence in which the different media are processed in the test chart print job may be selected such that the print sequence matches the sequence of the media when ordered by rising or falling process temperatures. Similarly, in an ink jet print process, for example, in which there should be only a very small gap between the surface of the print media and a nozzle face of the print head, the print sequence may be arranged according to rising or falling media sheet thicknesses in order to minimize the time required for adjusting the height of the print head.

Before the test chart print job is sent to the print engine, it is convenient that the color management application issues an alert informing the operator which media are needed for the test chart print job, so that the required media may be provided in time. If the printer to be used for the update has a plurality of media input trays, the required media may be pre-loaded into empty trays, so that the test chart print job may start automatically with automatic supply of the required media from the respective trays.

### BRIEF DESCRIPTION OF THE DRAWINGS

An embodiment example will now be described in conjunction with the drawings, wherein:
- Fig. 1: is a diagram of a printing system to which the invention is applicable; and
- Fig. 2: is a flow chart illustrating essential steps of a method according to the invention.

### DETAILED DESCRIPTION OF EMBODIMENTS

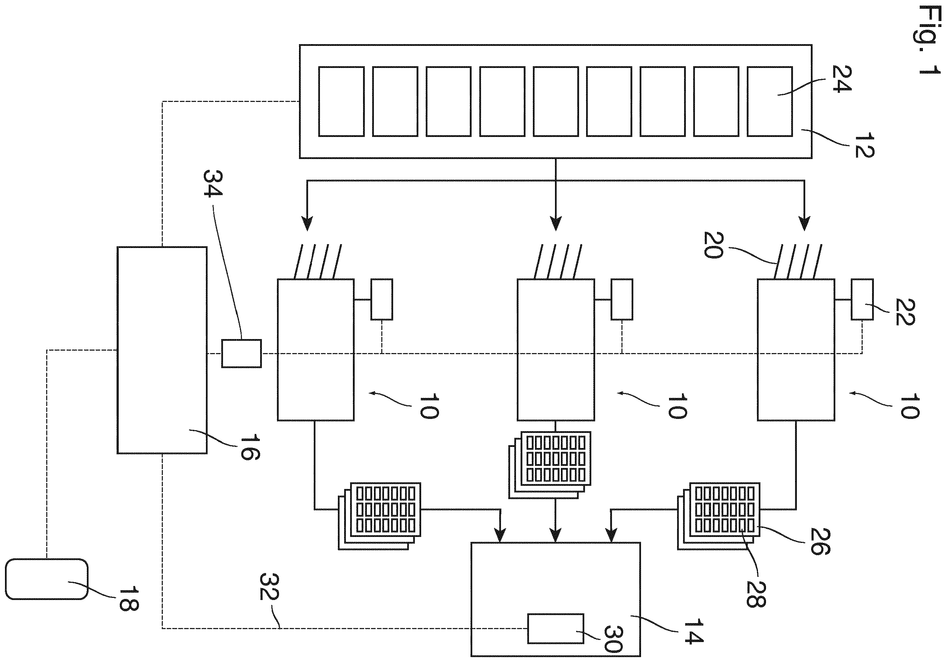

In the example shown in Fig. 1, a printing system comprises three printers 10, a media store 12, a measuring desk 14, a central control unit 16 and a mobile device 18 (e.g. a smartphone) of an operator.

The printers 10 may have identical or different designs and properties. Each printer has a number of input trays 20 for accommodating media sheets of different types. As is well known in the art, each printer has a sheet supply system that is controlled by a local controller of the printer so as to separate the required media sheets from stacks in the corresponding media trays 20 and to feed them to a print engine of the printer. Further, each printer 10 has a user interface 22 which can be used by an operator for entering commands and can also be used for displaying messages to the operator, including, for example, messages prompting the operator to load media sheets of the required types into the input trays 20. Alternatively, different media types of the same size may be put in a prescribed order in a single input tray, from which the media sheets for printing the test chart print job, are fed into the print engine.

The media sheets are stored in the media store 12 which has separate storage compartments for each media type 24. The storage compartments may comprise separate environmental conditioning systems so that the media sheets of each type can be kept under controlled temperature and air humidity conditions. For example, when a specific media type 24 has been scheduled for printing, the corresponding storage compartment in the media store 12 may be controlled in advance so as to adjust the temperature and humidity conditions to specified values which may be different for each media type. In this way it is assured, that, when the media are needed in one of the printers 10, the media sheets already have the required temperature and humidity.

For adequate operation, the printers 10 print test charts 26 in order to update the color profile and/or the proper calibration table for each media type. Each test chart 26 has a number of color fields 28 with different colors printed by the printer 10. By way of example, the printers 10 may be ink jet printers utilizing inks in the basic colors CYMK, and the colors of the color fields 28 may be composite colors obtained by mixing the basic colors in specified proportions.

The measuring desk 14 is used for measuring the colors of the color fields 28 of the test charts 26, e.g. by means of a spectrometer 30, in order to check for each color field 28 whether the measured color deviates from a specified target color for that color field. If the measured deviation is larger than a certain tolerance, the specifications for the color composition (in case of a color profile update) or the specifications for the settings of the printer 10 are changed so as to eliminate the deviation.

The central control unit 16 includes an electronic data processing system that is capable of communicating with the local controllers of the printers 10, a controller of the media store 12, the spectrometer 30 and the mobile device 18 via a wired or wireless network 32. The control unit 16 may run several software applications for administrating the entire printing system, including software for scheduling the print jobs, and the like. One of the software applications running on the central control unit 16 is a color management application which administrates the necessary updates of color profiles and calibrations for each media type 24 and each printer 10. For that purpose, the application maintains a database that stores for each media type 24 a time stamp indicating the time of the last update, and an update interval specifying the allowed time between two updates. Alternatively or additionally, the number of prints produced by a print engine, a change of toner or ink cartridge or media batch and also a calibration request by a print job may trigger the calibration procedure. Also a specific customer requirement may be that a calibration is performed not longer ago than a predetermined time. All of these events trigger a calibration and the pending job structure is analyzed to combine the various calibrations in a calibration print job. The communication between the local controllers of the printers 10 and the central control unit 16 includes a transfer of a status of the printer in terms of print process parameters, such as its actual temperature. Also available (not shown) is a media catalogue which lists the properties of the media and the required operating conditions of specific printers wherein the media are applied.

Thus, as a first step, the application determines which media are actually scheduled to be used in an upcoming period of time. Then, the application calculates for each of these media types when the next update will become due. The application then determines the printer 10 on which the update shall be performed, prompt the operator (via the mobile device 18 or one of the user interfaces 22) to load the media that are needed for the update into the input trays 20 of the selected printer, and may then instruct the printer to print the test charts 26. The application may also receive the measurement results from the spectrometer 30 and may store the color profiles for each media type and the calibration settings for each media type and printer in its data base.

However, rather than initiating each update procedure at the time when it becomes due, the application is configured to collect a plurality of update procedures that are going to become due in the near future for different media, and the corresponding commands for printing the test charts 26 are integrated into a common test chart print job 34 that is then sent to the selected printer. This allows the calibration procedure to be scheduled at a convenient point of time.

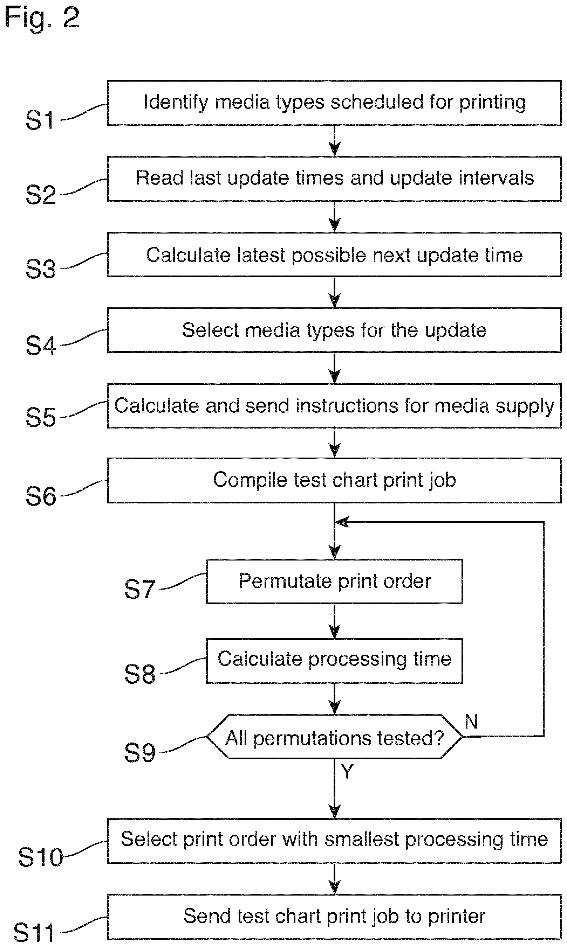

An example of a method of creating such a test chart print job will now be described in conjunction with Fig. 2.

In step S1, the application identifies the media types 24 that are presently scheduled for printing, which means that the media types are going to be needed in at least one production print job that has already been planned. Then, the last update times and the update intervals for these media types are read in step S2, and a latest possible time for the next update is calculated in step S3.

In order to avoid that time is wasted for too frequent updates, the allowable update intervals should be exhausted as far as possible. Thus, the latest possible update time will be the time when the update interval for a first one of the identified media types expires. Of course, if a media type is not used in a pending print job, it will not be included in the test chart print job and an existing color profile or calibration table may become overdue. This is without consequence as the profile or calibration table is not used for the due jobs.

Step S4 is a step of selecting media types for the update. These media types will of course include the media type for which it has been decided in step S3 that the update time expires. However, in order to make the update procedure more efficient, a plurality of updates for a plurality of media types are carried out in one batch. Thus, the media types selected in step S4 include also one or more of the other media types that have been identified in step S1. A criterion for selecting a media type for an update may be that the allowed update interval for the media type will expire within a certain time period after the update time that has been scheduled in step S3.

Step S4 may also include selecting other media types that have not been identified in step S1 but are frequently used in the printing system, so that it is likely that they will be needed in near future.

Another criterion for selecting the media types in step S4 is whether or not the necessary updates can be performed on the same printer. This criterion will generally be fulfilled for color profile updates. However, if the necessary updates include a calibration update, other calibration updates (for other media) can be selected only if they become due for the same printer.

If the updates that become due comprise only color profile updates, the selection of the printer 10 may depend on criteria that relate to the operating states of the printers. For example, when a printer completes a production print job before the time calculated in step S3, it is convenient to select that printer because it will then not be necessary to interrupt a running production print job. If there is still freedom of choice, it is preferred to select the printer for which the settings can be changed most quickly into the settings that are required for the update (e.g. no long warm-up time needed).

In step S5, the required media conditions (temperature and humidity) for the selected media types are looked-up in a table, and, if necessary, instructions for conditioning the media are sent to the media store 12. Simultaneously or later, but at least well before the time calculated in step S3, the operator is prompted to load the required media into one or more of the input trays 12 of the selected printer, if the media are not available already in that printer. Optionally, the application may output a media picklist identifying the media types that have to be fetched from the media store.

Once the media types and printers have been selected in step S4, a test chart print job comprising printing of all engine check pages and test charts for all selected media types is compiled in step S6. Since all test charts will be printed one after the other on the same printer, only one set of engine check pages needs to be printed before printing all the test charts.

Since the test chart print job is a mixed-media print job, the sequence in which the different media types are processed in the print job as compiled in step S6 may not be optimal in terms of productivity. For example, if the job comprises three media types and the media type to be printed first and the media type to be printed last require a high process temperature whereas the media type to be printed second requires a low process temperature, e.g. in a curing station for curing the ink, much time will be wasted for cooling down the curing station and then for warming it up again. If the curing station is presently at a low temperature, it would be more expedient to print the second media type first. On the other hand, if the curing station is presently at a high temperature, it would be more expedient to start with the first and third media types and to print the second media type last. The decision may also depend upon the temperature of the curing station that is required at the start of the next production print job to be performed after the test chart print job.

In general, it will be useful to sort the media to be processed in the test chart print job by increasing or decreasing process temperatures and then to print the test charts on the media of the different types in that order, so that the natural warming-up or cooling-down behavior of the print engine may be utilized for adjusting the temperature to the respectively required values as fast as possible.

The efficiency of the print process may also depend upon other factors, such as the thicknesses of the media sheets, which require adjustments of the height of the print head. In that case, it will be useful to print on the different media in a sequence in which the media are ordered by increasing or decreasing thickness.

By way of example, Fig. 2 illustrates a process that can respond flexibly to a large variety of different criteria for optimizing the productivity. That process comprises a loop of steps S7, S8 and S9 and implements a kind of "brute force" approach. In step S7, the print order is permutated, for example by changing a print order 1 - 2- 3 to 2-1 - 3 (transposition of the first and second positions). Then, in step S8, the expected processing time is calculated for the permutated print order. In step S9, it is checked whether all possible permutations of the print order have been tested. If that is not the case (N), the process loops back to step S7 and the print order is permutated once again, e.g. from 2 - 1 - 3 to 2 - 3 - 1 (transposition of the second and third positions). In general, if the number of different media types is n, then the number of possible permutations will be n! (n! = 6 for n = 3), so that the loop has to be repeated n! times. Of course, when the loop is entered at step S7 for the first time, the permutation of the print order may be skipped, so that step S8 will calculate the processing time for the print order that has been obtained in step S5.

When it is found in step S9 that all possible permutations have been tested, the process exits the loop with step S10 where the results obtained in step S8 are reviewed for identifying the print order that leads to the smallest processing time.

Then, in step S11, the print job with the print order selected in step S10 is sent to the selected printer where it will be inserted in the print queue of that printer, or, alternatively, in a special print box, possibly with priority instructions that assure that the test chart print job will be processed before the first update interval expires. It will be convenient to add a media identification on every test chart, as the order of the media is determined by the algorithm.

## Claims

1. A method for color management in a printing system comprising a printer (10), having printer settings to convert image color values into printer colorant control values, the method comprising the calibration steps of:
a) printing a color test chart (26) for a specified media type (24) on the printer (10);
b) measuring a printed color (28) on the color test chart;
c) establishing a relation between the printed color, media type and printer settings; and
d) adjusting the printer settings on the basis of the established relation;
**characterized in that** the method further comprises the step of:
composing a test chart print job, wherein at least two calibrations for at least two different media types according to steps a) to d) that are due within a predetermined time range, are collected to be executed collectively.

2. The method according to claim 1, wherein an analysis of a pending print job queue is made to determine which calibrations are due within the predetermined time range.

3. The method according to claim 1, wherein the various calibrations are ordered to optimize a print order wherein the media types associated with the various calibrations, are processed in the test chart print job, thereby minimizing execution time.

4. The method according to claim 3, wherein a processing temperature is specified for each media type and the step of ordering comprises ordering the various calibrations by the processing temperatures of the associated media types and selecting a print sequence that matches the processing temperature to the actual printer temperature.

5. The method according to claim 3, for a printing system in which the printer (10) comprises a height-adjustable print head and the step of ordering comprises ordering the associated media types by thickness of the media sheets and selecting a print order that matches the thickness to the actual print head height.

6. The method according to any of the preceding claims, wherein the step of composing a test chart print job comprises a further step of issuing instructions for supplying the media types associated with the various calibrations.

7. The method according to any of the preceding claims, wherein the printer comprises a plurality of input trays (20) for media sheets and the media sheets associated with the various calibrations are loaded in a dedicated input tray.

## Patentansprüche

1. ein Verfahren zur Farbverwaltung in einem Drucksystem, das einen Drucker (10) mit Druckereinstellungen zur Umwandlung von Bildfarbwerten in Druckerfarbstoffsteuerwerte umfasst, wobei das Verfahren die folgenden Kalibrierungsschritte umfasst:
a) Drucken einer Farbtestkarte (26) für einen bestimmten Medientyp (24) auf dem Drucker (10);
b) Messung einer gedruckten Farbe (28) auf der Farbtestkarte;
c) Herstellung einer Beziehung zwischen der gedruckten Farbe, dem Medientyp und den Druckereinstellungen; und
d) Anpassung der Druckereinstellungen auf der Grundlage der festgestellten Beziehung;
**dadurch gekennzeichnet, dass** das Verfahren außerdem den folgenden Schritt umfasst: Zusammenstellen eines Druckauftrags für ein Testkarte, wobei mindestens zwei Kalibrierungen für mindestens zwei verschiedene Medientypen gemäß den Schritten a) bis d), die innerhalb eines vorbestimmten Zeitraums fällig sind, gesammelt werden, um gemeinsam ausgeführt zu werden.

2. das Verfahren nach Anspruch 1, wobei eine Analyse einer Warteschlange anstehender Druckaufträge durchgeführt wird, um zu bestimmen, welche Kalibrierungen innerhalb des vorgegebenen Zeitraums fällig sind.

3. das Verfahren nach Anspruch 1, wobei die verschiedenen Kalibrierungen so angeordnet werden, dass eine Druckreihenfolge optimiert wird, bei der die den verschiedenen Kalibrierungen zugeordneten Medientypen in dem Testchart-Druckauftrag verarbeitet werden, wodurch die Ausführungszeit minimiert wird.

4. das Verfahren nach Anspruch 3, wobei für jeden Medientyp eine Verarbeitungstemperatur angegeben ist und der Schritt des Anordnens das Anordnen der verschiedenen Kalibrierungen nach den Verarbeitungstemperaturen der zugehörigen Medientypen und das Auswählen einer Drucksequenz umfasst, die die Verarbeitungstemperatur mit der tatsächlichen Druckertemperatur in Übereinstimmung bringt.

5. das Verfahren nach Anspruch 3 für ein Drucksystem, bei dem der Drucker (10) einen höhenverstellbaren Druckkopf aufweist und der Schritt des Ordnens das Ordnen der zugehörigen Medientypen nach der Dicke der Medienblätter und das Auswählen eines Druckauftrags umfasst, der die Dicke an die tatsächliche Druckkopfhöhe anpasst.

6. das Verfahren nach einem der vorhergehenden Patentansprüche, wobei der Schritt des Zusammenstellens eines Druckauftrags für eine Testkarte einen weiteren Schritt der Ausgabe von Anweisungen für die Bereitstellung der mit den verschiedenen Kalibrierungen verbundenen Medientypen umfasst.

7. das Verfahren nach einem der vorhergehenden Patentansprüche, wobei der Drucker eine Vielzahl von Eingabefächern (20) für Medienblätter umfasst und die den verschiedenen Kalibrierungen zugeordneten Medienblätter in ein spezielles Eingabefach geladen werden.

## Revendications

1. Méthode de gestion des couleurs dans un système d'impression comprenant une imprimante (10), avec des réglages d'imprimante pour convertir les valeurs de couleur d'image en valeurs de contrôle de colorant d'imprimante, la méthode
comprenant les étapes d'étalonnage suivantes :
a) impression d'une mire de couleur (26) pour un type de support spécifié (24) sur l'imprimante (10) ;
b) mesurer une couleur imprimée (28) sur le nuancier ;
c) établir une relation entre la couleur imprimée, le type de support et les paramètres de l'imprimante ; et
d) ajuster les paramètres de l'imprimante sur la base de la relation établie ;
**caractérisée par le fait que** la méthode comprend en outre l'étape suivante :
composer un travail d'impression de mire, dans lequel au moins deux étalonnages pour au moins deux types de supports différents, conformément aux étapes a) à d), qui doivent être effectués dans un laps de temps prédéterminé, sont rassemblés pour être exécutés collectivement.

2. la méthode selon la revendication 1, dans laquelle une analyse de la file d'attente des travaux d'impression en cours est effectuée pour déterminer les calibrages qui doivent être effectués dans la plage de temps prédéterminée.

3. la méthode selon la revendication 1, dans laquelle les divers étalonnages sont ordonnés de manière à optimiser un ordre d'impression dans lequel les types de supports associés aux divers étalonnages sont traités dans le travail d'impression de la mire, ce qui permet de minimiser le temps d'exécution.

4. la méthode selon la revendication 3, dans laquelle une température de traitement est spécifiée pour chaque type de support et l'étape de commande consiste à ordonner les divers étalonnages en fonction des températures de traitement des types de support associés et à sélectionner une séquence d'impression qui fait correspondre la température de traitement à la température réelle de l'imprimante.

5. la méthode selon la revendication 3, pour un système d'impression dans lequel l'imprimante (10) comprend une tête d'impression réglable en hauteur et l'étape de commande consiste à classer les types de supports associés par épaisseur des feuilles de support et à sélectionner un ordre d'impression qui fait correspondre l'épaisseur à la hauteur réelle de la tête d'impression.

6. le procédé selon l'une quelconque des revendications précédentes, dans lequel l'étape de composition d'un travail d'impression de mire comprend une étape supplémentaire d'émission d'instructions pour la fourniture des types de supports associés aux différentes calibrations.

7. Procédé selon l'une quelconque des revendications précédentes, dans lequel l'imprimante comprend plusieurs bacs d'entrée (20) pour les feuilles de support et les feuilles de support associées aux différents calibrages sont chargées dans un bac d'entrée dédié.
